# EUROPEAN PATENT APPLICATION

(11) **EP 2 360 026 A1**
(43) Date of publication of application: **24.08.2011**
(21) Application number: 09833098.8
(22) Date of filing: 11.09.2009
(51) Int. Cl.: B44F 1/04, B44C 5/08, G02B 5/18

(54) **EXTERIOR COMPONENT, MANUFACTURING METHOD THEREOF, AND ELECTRONIC EQUIPMENT**

(30) Priority: 19.12.2008 JP 2008323447
(71) Applicant: Panasonic Corporation, Kadoma-shi Osaka 571-8501 (JP)
(72) Inventor: UTSURO, Hidetoshi, Osaka-shi, Osaka 540-6207 (JP); NISHIKAWA, Yukio, Osaka-shi, Osaka 540-6207 (JP); TAKAHASHI, Masayuki, Osaka-shi, Osaka 540-6207 (JP); WADA, Toshihiko, Osaka-shi, Osaka 540-6207 (JP)
(74) Representative: Grünecker, Kinkeldey, Stockmair & Schwanhäusser Anwaltssozietät
(86) International application number: PCT/JP2009/004511
(87) International publication number: WO 2010/070788

(57) **Abstract**

On a triangular groove array structure 53 with a constant structure period, first structural color regions 51 and a second structural color region 52 are formed. The first structural color regions 51 are covered with a protective layer 54 having a refractive index N and the second structural color region 52 is directly exposed to an air layer 55. Variations in color development characteristics owing to the influence of the protective layer 54 can bring the pattern and character of the second structural color region 52 into relief with a contrast.

## Description

### Technical Field

The present invention relates to exterior parts for developing colors with a relief structure, a method of manufacturing the same, and electronic equipment provided with the exterior parts.

### Background Art

In the related art, known molding methods for producing decorative effects on exterior parts include: embossing; secondary processing on the molded exterior parts; and carving decorative lines and characters on the die surfaces of the exterior parts such that the lines and characters appear to stand out in relief on the molding surfaces. A molded article may be colored by special molding such as multi-colored molding but generally, a molded article of a certain color is subjected to printing, pasting, or painting.

In coloring of these methods, however, the manufacturing cost increases because of the step of printing, pasting, or painting and a large amount of carbon dioxide is emitted in the painting step. Moreover, the use of various pigments, dyes, or organic solvents requires aftertreatment such as.waste liquid treatment, causing serious problems in operations and environments.

In order to solve these problems, color developing techniques have been used in which colors are structurally developed by physical phenomena such as interference or diffraction of light without using coloring matters such as pigments and dyes. For example,
a transfer sheet having a micro-relief surface is available (e.g., see Patent Literature 1).

The structural color development does not depend on the absorption of light of a specific wavelength into a material. A color is developed from colored light generated depending on the material and the structure, or a change of color. This is because the structural color development depends on optical quality varying with wavelengths of light. In this case, the structural color development is different from color development depending upon the electronic qualities of molecules and solid substances such as coloring matters.

Such a coloring body is colorless and develops a color by the reflection, interference, and diffraction of light. Thus the coloring body is called a structural coloring body.

Optical phenomena in the structural color development include multilayer interference, thin-film interference, refraction, dispersion, light scattering, Mie scattering, diffraction, and diffraction grating. In the configurations of the structural color development, optical thin films that are 1 µm or less in thickness are frequently used. Such optical thin films are formed by vacuum thin-film coating technology such as vacuum deposition and sputtering. The structural color development is hardly varied with time by ultraviolet rays and has advantages such as high gloss. Thus in recent years, the structural color development has been a promising painting and coloring method for exterior parts.

FIG. 11 is a structural diagram showing a transfer sheet of Patent Literature 1 utilizing the structural color development of the related art. Reference numeral 1 denotes a support, reference numeral 2 denotes a heat-resistant protective film, reference numeral 3 denotes a diffracting structure forming layer, reference numeral 4 denotes a diffraction effect layer, reference numeral 5 denotes a heat-resistant mask layer, and reference numeral 6 denotes an adhesive layer.

The transfer sheet is formed in the following steps:

On the support 1, the heat-resistant protective layer 2 mainly composed of polyamide-imide resin with a glass transition temperature Tg of 250° is applied and the diffracting structure forming layer 3 mainly composed of urethane resin is applied thereon. Further, on the surface of the diffracting structure forming layer 3, a diffraction grating having a micro-relief pattern is formed by a roll embossing method.

Next, the diffraction effect layer 4 that is a metallic reflective layer is formed on the diffracting structure forming layer 3 on which the diffraction grating has been formed, and the heat-resistant mask 5 is pattern-printed on the diffraction effect layer 4.

The layers are immersed into a bath filled with a NaOH solution to etch the diffraction effect layer 4 exposed in a part where the heat-resistant mask 5 is not provided. After that, the adhesive layer 6 is formed to complete the fabrication of the transfer sheet.

Through these steps, the micro-relief pattern constituting the diffraction grating is formed on a transferred body. Thus colored light with a structural color can be produced and the transfer sheet with excellent design is obtained.

### Citation list

### Patent Literature

Patent Literature 1: Japanese Patent Laid-Open No. 2005-7624

### Summary of Invention

### Technical Problem

As described in Patent Literature 1, in the case where the micro-relief pattern constituting the diffraction grating is formed on the transferred body, the color development characteristics of a structural color developed by the diffraction grating vary with colored light and a color, that is, the intensity of a generated wavelength. The color development characteristics are affected by the structure period and groove shape of the diffraction grating or the refractive index of a coating material covering the diffraction grating.

However, as described in Patent Literature 1, in the case where the structure period and groove shape of the diffraction grating or the refractive index of the coating material covering the diffraction grating is uniform over a structural color region, the overall region has uniform color development characteristics.

In order to improve the design of an exterior part, it is necessary to bring a pattern and a character into relief by enhancing contrast with structural colors and thus multiple regions of different color development characteristics are required. For this reason, it is necessary to properly change the structure period and groove shape of the diffraction grating or the refractive index of the coating material covering the diffraction grating.

However, in order to clarify the influence of these factors on the color development characteristics, it is necessary to analyze the scatter phenomenon of an electromagnetic field in a surface micro-relief structure. Such analysis calculation is complicated with a large calculated amount and thus has not been performed in the related art. This point is not clearly defined in Patent Literature 1.

In order to improve the design of an exterior part, however, it is necessary to provide a device for enhancing contrast with portions of different color development characteristics and a device for designing multiple regions with properly changed factors including the structure period and groove shape of a diffraction grating or the refractive index of a coating material covering the diffraction grating.

As compared with multiple regions provided by varying the structure period and groove shape of a diffraction grating, it is easier to provide portions of different color development characteristics by applying coatings of materials having different refractive indexes. Thus it is desirable to bring a pattern and a character into relief by enhancing contrast with structural colors according to the latter method.

An object of the present invention is to provide exterior parts and a method of manufacturing the same and electronic equipment using the same, by which the exterior parts can be easily fabricated and any pattern and character can be brought into relief by enhancing contrast with structural colors.

### Solution to Problem

An exterior part of the present invention is an exterior part on which a structural color region developing a color with a relief structure is provided, the structural color region including: a groove array structure on which grooves are formed in parallel with a constant structure period; and first and second regions having different refractive indexes on the groove array structure.

Further, an exterior part of the present invention is an exterior part on which a structural color region developing a color with a relief structure is provided, the structural color region including: a groove array structure on which grooves are formed in parallel with a constant structure period; and first and second regions provided on the groove array structure, the groove array structure being covered with a light-transmissive protective layer in the first region and in direct contact with the air in the second region.

Further, an exterior part of the present invention is an exterior part on which a structural color region developing a color with a relief structure is provided, the structural color region including: a groove array structure on which grooves are formed in parallel with a constant structure period; and an air layer and first and second regions that are provided on the groove array structure, the air layer containing the air, the first region being covered with a first protective layer that is a light-transmissive layer covering a surface of the air layer and has a different refractive index from the refractive index of the air, the second region being covered with a second protective layer that is a light-transmissive layer covering a surface of the groove array structure other than the air layer and has the same refractive index as the first protective layer.

An exterior part of the present invention is an exterior part on which a structural color region developing a color with a relief structure is provided, the structural color region including: a groove array structure on which grooves are formed in parallel with a constant structure period; and first and second regions provided on the groove array structure, the first region being covered with a fourth protective layer that is a light-transmissive layer covering a surface of a third protective layer and has a different refractive index from the refractive index of the third protective layer, the third protective layer being a light-transmissive layer partially covering a surface of the groove array structure, the second region being covered with a fifth protective layer that is a light-transmissive layer covering the surface of the groove array structure other than the third protective layer and has the same refractive index as the fourth protective layer.

To be specific, the grooves of the groove array structure are triangular in cross section in the depth direction.

A method of manufacturing an exterior part according to the present invention, in the fabrication of the exterior part on which a structural color region developing a color with a relief structure is provided, the method including: forming, in the structural color region, a groove array structure on which grooves are formed in parallel with a constant structure period; and forming first and second regions on the groove array structure, the groove array structure being covered with a light-transmissive protective layer in the first region and in direct contact with the air in the second region.

A method of manufacturing an exterior part according to the present invention, in the fabrication of the exterior part on which a structural color region developing a color with a relief structure is provided, the method including: forming, in the structural color region, a groove array structure on which grooves are formed in parallel with a constant structure period; and forming an air layer and first and second regions on the groove array structure, the air layer containing the air, the first region being covered with a first protective layer that is a light-transmissive layer covering a surface of the air layer and has a different refractive index from the refractive index of the air, the second region being covered with a second protective layer that is a light-transmissive layer covering a surface of the groove array structure other than the air layer and has the same refractive index as the first protective layer.

A method of manufacturing an exterior part according to the present invention, in the fabrication of the exterior part on which a structural color region developing a color with a relief structure is provided, the method including: forming, in the structural color region, a groove array structure on which grooves are formed in parallel with a constant structure period; forming second protective layers at certain intervals on the groove array structure, the second protective layers being light-transmissive layers covering a surface of the groove array structure; and forming an air layer on the groove array structure by disposing a sheet having the same refractive index as the second protective layer on and across the adjacent second protective layers such that the air layer having a different refractive index from the refractive index of the second protective layer is formed between the second protective layers and between the groove array structure and the sheet.

A method of manufacturing an exterior part according to the present invention, in the fabrication of the exterior part on which a structural color region developing a color with a relief structure is provided, the method including: forming, in the structural color region, a groove array structure on which grooves are formed in parallel with a constant structure period; forming second protective layers at certain intervals on the groove array structure, the second protective layers being light-transmissive layers covering a surface of the groove array structure; and forming an air layer on the groove array structure by disposing a film having the same refractive index as the second protective layer on and across the adjacent second protective layers such that the air layer having a different refractive index from the refractive index of the second protective layer is formed between the second protective layers and between the groove array structure and the film.

A method of manufacturing an exterior part according to the present invention, in the fabrication of the exterior part on which a structural color region developing a color with a relief structure is provided, the method including: forming, in the structural color region, a groove array structure on which grooves are formed in parallel with a constant structure period; and forming first and second regions on the groove array structure, the first region being covered with a fourth protective layer that is a light-transmissive layer covering a surface of a third protective layer and has a different refractive index from the refractive index of the third protective layer, the third protective layer being a light-transmissive layer partially covering a surface of the groove array structure, the second region being covered with a fifth protective layer that is a light-transmissive layer covering the surface of the groove array structure other than the third protective layer and has the same refractive index as the third protective layer.

To be specific, the third protective layer of the first region is formed on the groove array structure, and the fourth and fifth protective layers are formed on the third protective layer and in the second region on the groove array structure, the fourth and fifth protective layers having the refractive indexes different from the refractive index of the third protective layer.

### Advantageous effects of Invention

According to the present invention, in an exterior part on which a structural color region developing a color with a relief structure is provided, the structure period and groove shape of a fine relief pattern constituting a diffraction grating are properly selected and the refractive index of a coating material covering the fine relief pattern is properly changed in the structural color region. Thus any pattern and character can be brought into relief by enhancing contrast with structural colors, thereby improving the design of the exterior part.

### Brief Description of the Drawings

FIG. 1 is an enlarged plan view showing that visible light is diffracted on a surface of an exterior part according to an embodiment of the present invention;
FIG. 2 is an enlarged sectional view showing a structural color region of the present embodiment;
FIG. 3 is an explanatory drawing showing the structural color region developing a color with a triangular groove array structure covered with protective layers having different refractive indexes according to the present embodiment;
FIG. 4 is a wavelength diffraction characteristic diagram depending on variations in structure in FIG. 3;
FIG. 5 shows an enlarged plan view and the A-A sectional view of the plan view according to a first embodiment of the present invention;
FIG. 6 shows an enlarged plan view and the A-A sectional view of the plan view according to a second embodiment of the present invention;
FIG. 7 shows an enlarged plan view and the A-A sectional view of the plan view according to a third embodiment of the present invention;
FIG. 8 shows an enlarged plan view and the A-A sectional view of the plan view according to a modification of the third embodiment;
FIG. 9 shows an enlarged plan view and the A-A sectional view of the plan view according to a fourth embodiment of the present invention;
FIG. 10 shows an enlarged plan view and the A-A sectional view of the plan view according to a modification of the fourth embodiment;

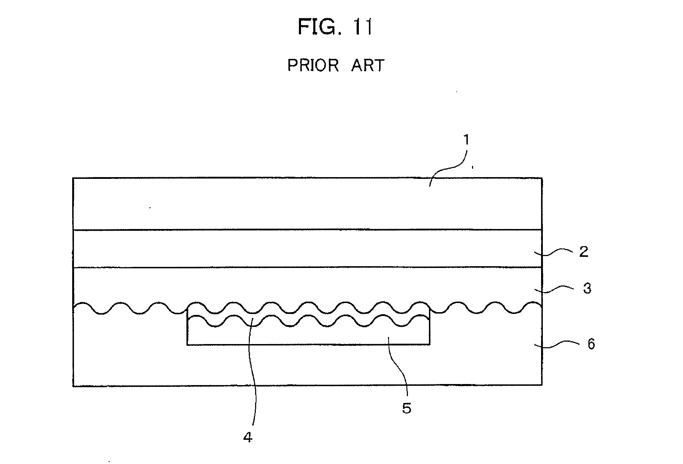

FIG. 11 is a structural diagram of a transfer sheet utilizing structural color development according to the related art;
FIG. 12 is a process drawing showing another manufacturing process according to the fourth embodiment; and
FIG. 13 is a process drawing showing still another manufacturing process according to the fourth embodiment.

### Description of Embodiments

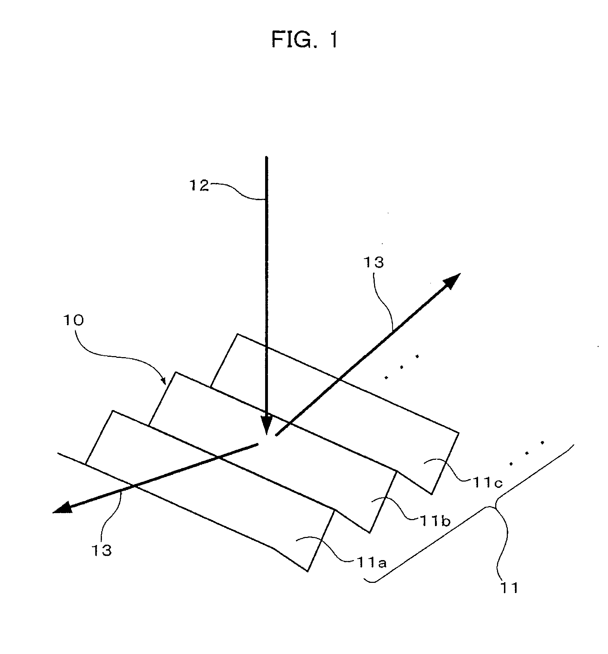

FIGS. 1 to 4 show an exterior part according to an embodiment of the present invention.

Exterior parts specifically include the exterior panels of electronic equipment and electrical appliances, the exterior panels of cellular phones, and the instrument panels of automobiles.

FIG. 1 is an enlarged plan view showing that visible light is diffracted on a surface of the exterior part.

A structural color region 10 in FIG. 1 has a triangular groove array structure 11 including a group of linear triangular grooves 11a, 11b, 11c, ... arranged in parallel with a constant structure period. Light 12 incident on the structural color region 10 from above is diffracted by the triangular groove array structure 11 perpendicularly to the triangular groove array structure 11, so that diffracted light 13 is generated.

The triangular groove array structure 11 is formed by carving the triangular grooves 11a, 11b, 11c, ... with a pointed cutting tool such that the grooves are triangular in cross section in the depth direction.

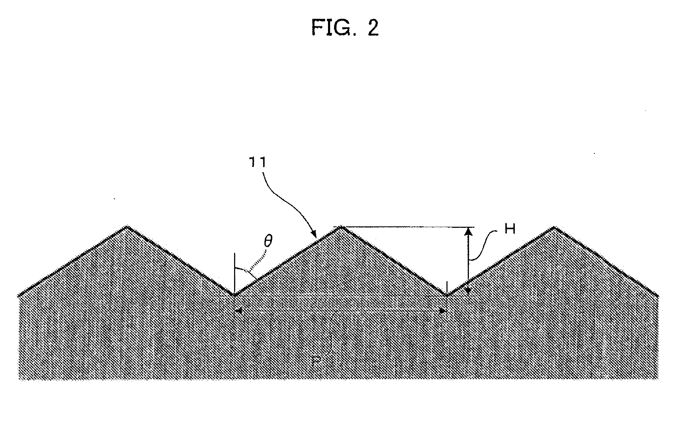

In a sample of the present example, the grooves were carved with a cutting tool having a 96-degree tip, so that the triangular groove array structure 11 of FIG. 2 had a slope angle θ of 48°. Reference character P denotes the structure period of the triangular groove array structure 11 and reference character H denotes the height of the triangular groove array structure 11.

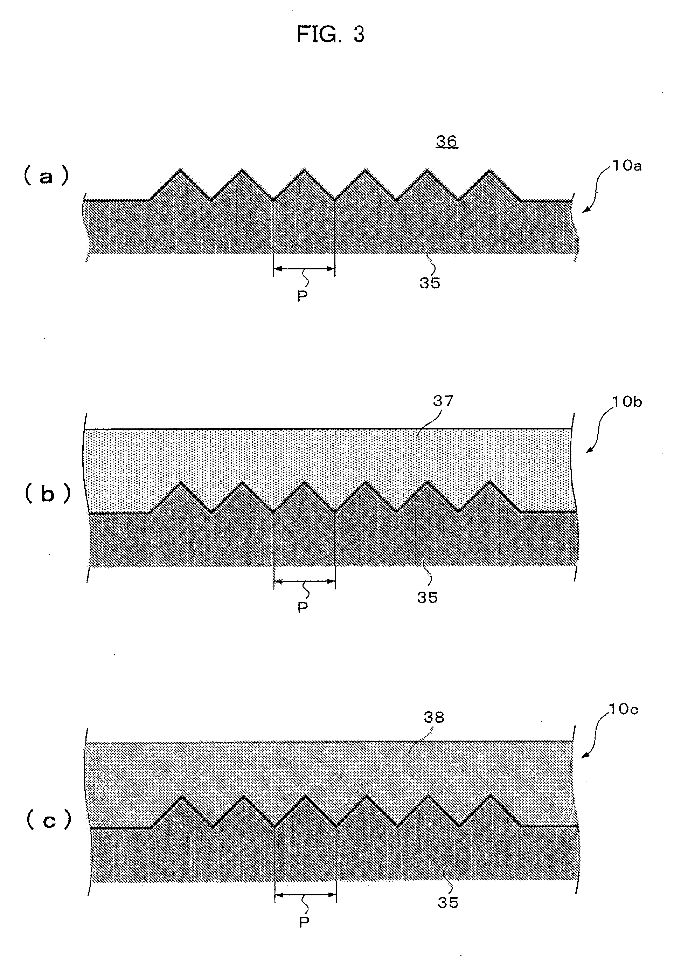

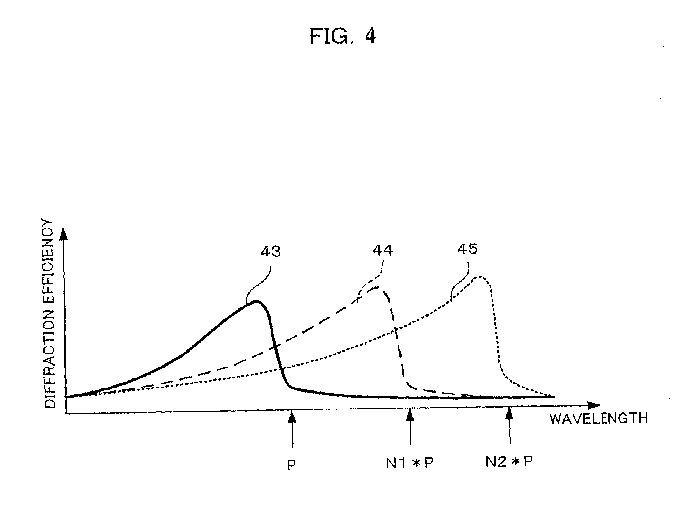

FIG. 4 shows wavelength diffraction characteristics in a structural color region 10a where a triangular groove array structure 35 having the structure period P is covered with an air layer 36 (not coated with a protective layer) as shown in FIG. 3(a), in a structural color region 10b where the triangular groove array structure 35 is coated with a protective layer 37 having a refractive index N1 as shown in FIG. 3(b), and in a structural color region 10c where the triangular groove array structure 35 is coated with a protective layer 38 having a refractive index N2 as shown in FIG. 3(c).

As shown in FIG. 4, the wavelength diffraction characteristics (the intensities of diffracted wavelengths) represent colored light and colors, that is, the intensities of generated wavelengths, and represent the color development characteristics of structural colors generated by a diffraction grating. The color development characteristics are affected by the structure period and groove shape of the diffraction grating or the refractive index of a coating material covering the diffraction grating.

In order to clarify how the color development characteristics are affected by the factors including the structure period and groove shape of the diffraction grating or the refractive index of the coating material covering the diffraction grating, it is necessary to analyze the scatter phenomenon of an electromagnetic field in a surface micro-relief structure. Such calculation is complicated with a large calculated amount and thus has not been performed in the related art. However, the modeling of the micro-relief structure and the rationalization of a computational algorithm make it possible to determine the wavelength diffraction characteristics of FIG. 4 in a relatively short time.

In the structural color region 10a of FIG. 3(a), the triangular groove array structure 35 with the structure period P exhibits a wavelength diffraction characteristic 43. The upper limit is set at the structure period P as shown in FIG. 4. At a wavelength shorter than the structure period P, the diffraction efficiency tends to increase in a band around the structure period. The diffraction efficiency tends to decrease as the wavelength becomes shorter from the structure period. At a wavelength longer than the structure period P, the diffraction efficiency rapidly declines.

A wavelength diffraction characteristic 44 in the structural color region 10b of FIG. 3(b) is equivalent to the multiplication of the structure period P by the refractive index N1 of the protective layer 37. This is because in the protective layer having the refractive index N1, the wavelength of visible light is divided by N1 as compared with the air having a refractive index of 1 and thus the structure period of the diffraction grating is relatively increased.

Assuming that the refractive index N2 is larger than the refractive index N1 in the two protective layers of FIGS. 3(b) and 3(c), a wavelength diffraction characteristic 45 in the structural color region 10c of FIG. 3(c) is further shifted to the long-wavelength side as shown in FIG. 4.

Thus in the exterior part on which the structural color region 10 develops a color with a relief structure, the triangular grooves are arranged with the constant structure period P and are covered with the protective layer having the refractive index N, so that the wavelength range of colored light can be controlled within a specific wavelength range while the upper limit of the wavelength range of the colored light is set at P x N.

In the present example, samples of the triangular groove array structure 11 were prepared with the structure periods P of 0.5 µm and 0.7 µm. The heights H of the triangular groove array structure 11 were 225 nm and 315 nm in the respective samples. In this case, it was confirmed that the base color of the structural color region 10 varied with the structure period of the triangular groove array structure 11, though other structures remained unchanged.

### (First Embodiment)

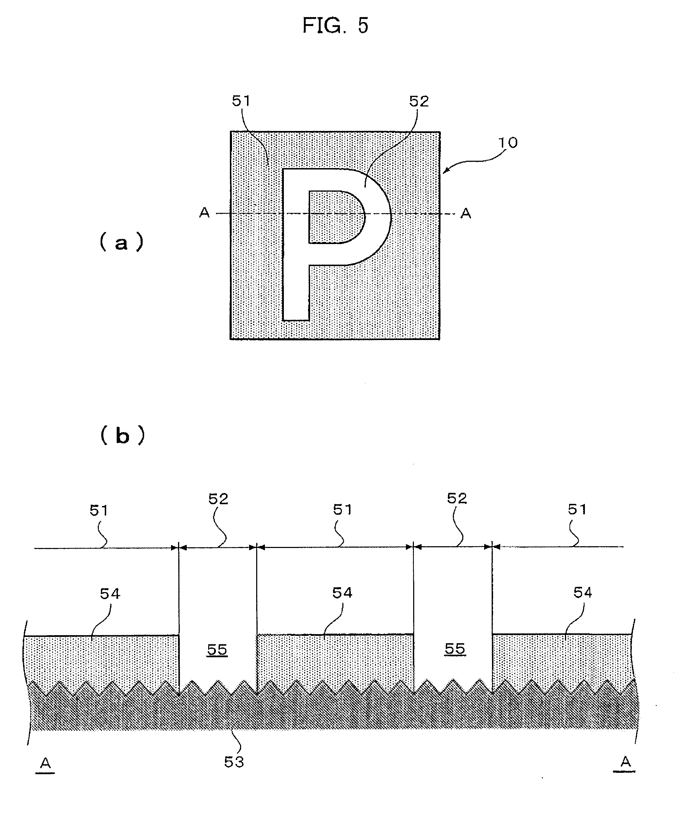

FIG. 5 shows a first embodiment of an exterior part according to the present invention.

FIG. 5(a) is a plan view and FIG. 5(b) is an enlarged view showing the A-A sectional view of FIG. 5(a). Illustrated is a structural color region on the surface of the exterior part.

A structural color region 10 of the exterior part includes: a groove array structure in which grooves are formed in parallel with a constant structure period; and a first region and a second region that have different refractive indexes on the groove array structure.

In the first embodiment, the groove array structure is a triangular groove array structure 53 having a constant structure period P. Formed on the triangular groove array structure 53 are first structural color regions 51 serving as first regions and a second structural color region 52 serving as a second region. In the first structural color regions 51, the triangular groove array structure 53 is covered with a protective layer 54 having a refractive index N. In the second structural color region 52, the triangular groove array structure 53 is directly exposed to the air through an air layer 55. The protective layer 54 is a light-transmissive layer, specifically, a transparent resin layer and the like. A letter "P" represented by the second structural color region 52 is an example of a logotype to be placed on the exterior part.

With this configuration, variations in color development characteristics owing to the influence of the protective layer 54 can bring a pattern and a character into relief with a contrast. In the present example, the letter "P" is directly exposed to the air and other parts of the structural color region 10 are covered with the protective layer 54 having the refractive index N.

The structural color regions are formed as follows: on the triangular groove array structure 53 formed by the foregoing processing method, only the second structural color region 52 is covered with a mask, the protective layer 54 is applied by using a material suitable for a relief structure on the surface of the triangular groove array structure 53, and then the mask is removed.

In this case, the protective layer 54 may be applied after the triangular groove array structure is processed on the exterior part. Alternatively, the protective layer 54 may be applied to a molded article after processing on the die of the exterior part and the transfer to the molded article.

### (Second Embodiment)

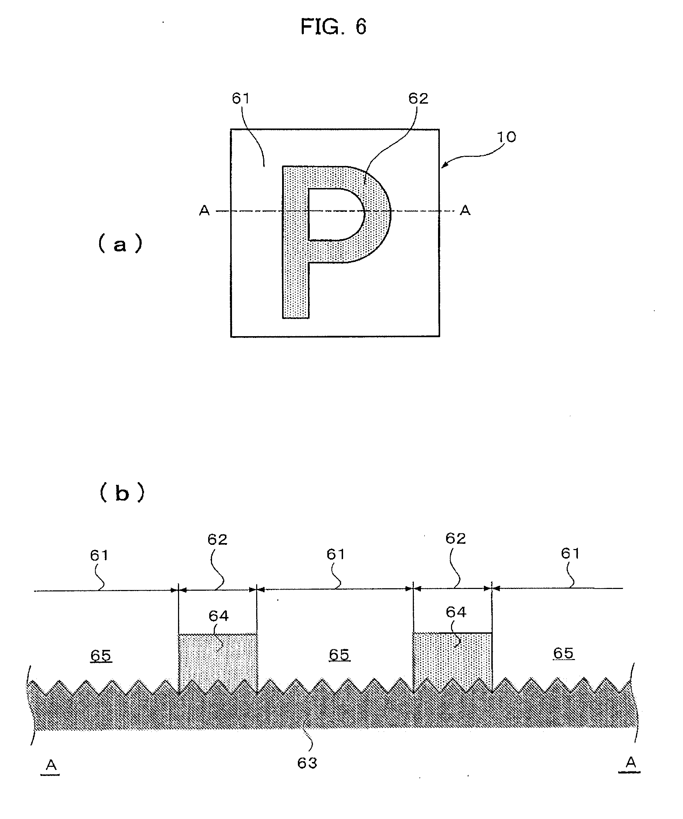

FIG. 6 shows a second embodiment of an exterior part according to the present invention.

FIG. 6(a) is a plan view and FIG. 6(b) is an enlarged view showing the A-A sectional view of FIG. 6(a). Illustrated is a structural color region 10 on the surface of the exterior part.

In the first embodiment, the first structural color regions 51 serving as the first regions are covered with the protective layer 54 and the second structural color region 52 serving as the second region is exposed to the air through the air layer 55. The second embodiment is different from the first embodiment in that first structural color regions 61 are each exposed to the air through an air layer 65 and a second structural color region 62 is covered with a protective layer 44.

In the second embodiment, the structural color region has a triangular groove array structure 63 with a constant structure period P. The triangular groove array structure 63 includes: the first structural color regions 61 serving as second regions where the triangular groove array structure 63 is directly exposed to the air through the air layer 65; and the second structural color region 62 serving as a first region where the triangular groove array structure 63 is covered with a protective layer 64 having a refractive index N. The protective layer 64 is a light-transmissive layer, specifically, a transparent resin layer.

With this configuration, variations in color development characteristics owing to the influence of the protective layer 64 can bring a pattern and a character into relief with a contrast. In the present example, a letter "P" is covered with the protective layer 64 having the refractive index N and other parts of the structural color region are directly exposed to the,air.

The structural color regions are formed as follows: on the triangular groove array structure 63 formed by the foregoing processing method, only the first structural color regions 61 are covered with a mask, the protective layer 64 is applied by using a material suitable for a relief structure on the surface of the triangular groove array structure 63, and then the mask is removed.

### (Third Embodiment)

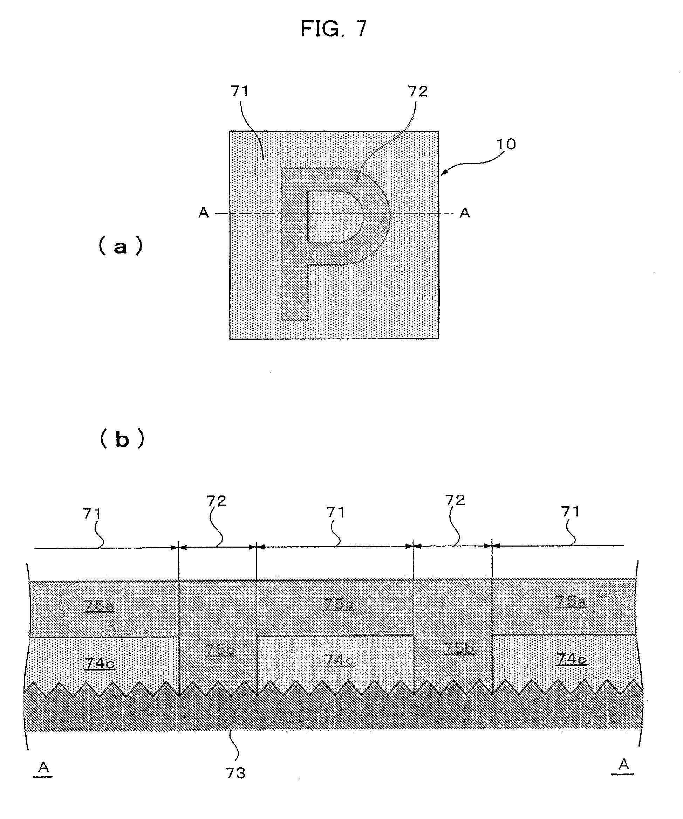

FIG. 7 shows a third embodiment of an exterior part according to the present invention.

FIG. 7(a) is a plan view and FIG. 7(b) is an enlarged view showing the A-A sectional view of FIG. 7(a). Illustrated is a structural color region 10 on the surface of the exterior part.

In the first embodiment, the surface of the protective layer 54 in the first structural color regions 51 and the second structural color region 52 are exposed to the air, whereas in the third embodiment, the surface of a protective layer 74c serving as a third protective layer in first structural color regions 71 and a second structural color region 72 are covered with protective layers and are not exposed to the air.

On the groove array structure 73, the first regions 71 and the second region 72 are provided. The first regions 71 are covered with a light-transmissive protective layer 75a serving as a fourth protective layer. The protective layer 75a covers the surface of the light-transmissive protective layer 74c partially covering the surface of the groove array structure 73 and has a different refractive index from that of the protective layer 74c. The second region 72 includes a light-transmissive protective layer 75b serving as a fifth protective layer. The protective layer 75b covers a part not covered with the protective layer 74c on the surface of the groove array structure 73 and has the same refractive index as the third protective layer 74c.

In the third embodiment, the structural color region has the triangular groove array structure 73 with a constant structure period P. On the surface of the triangular groove array structure 73, the first structural color regions 71 and the second structural color region 72 are formed. The first structural color regions 71 and the second structural color region 72 are formed as follows: in the first structural color regions 71, the surface of the triangular groove array structure 73 is covered with the protective layer 74c having a refractive index N1. Further, the protective layers 75a and 75b, which have a refractive index N2 different from the refractive index N1, respectively cover the surface of the protective layer 74c and the surface of the triangular groove array structure 73 in the second structural color region 72 disposed between the first structural color regions 71. The surfaces of the first structural color regions 71 and the second structural color region 72 are flush with each other.

With this configuration, wavelength diffraction characteristics are affected only by the refractive index of a part directly in contact with the triangular groove array structure 73. Variations in color development characteristics owing to the influence of the refractive indexes N1 and N2 can bring a pattern and a character into relief with a contrast. In the present example, a part other than a letter "P" is covered with the protective layer 74c having the refractive index N1 and the letter "P" is directly covered with the protective layer 75b having the refractive index N2.

The structural color regions are formed as follows:

First, on the triangular groove array structure 73 formed by the foregoing processing method, only the second structural color region 72 is covered with a mask, and the protective layer 74c is applied by using a material that has the refractive index N1 and is suitable for a relief structure on the surface of the triangular groove array structure 73.

Next, the mask is removed, and then the protective layers 75a and 75b are applied to the second structural color region 72 and the surface of the protective layer 74c in the first structural color regions 71 by using a material that has the refractive index N2 and is suitable for a relief structure over the first structural color regions 71 and the second structural color region 72, so that the surfaces of the first structural color regions 71 and the second structural color region 72 are flush with each other.

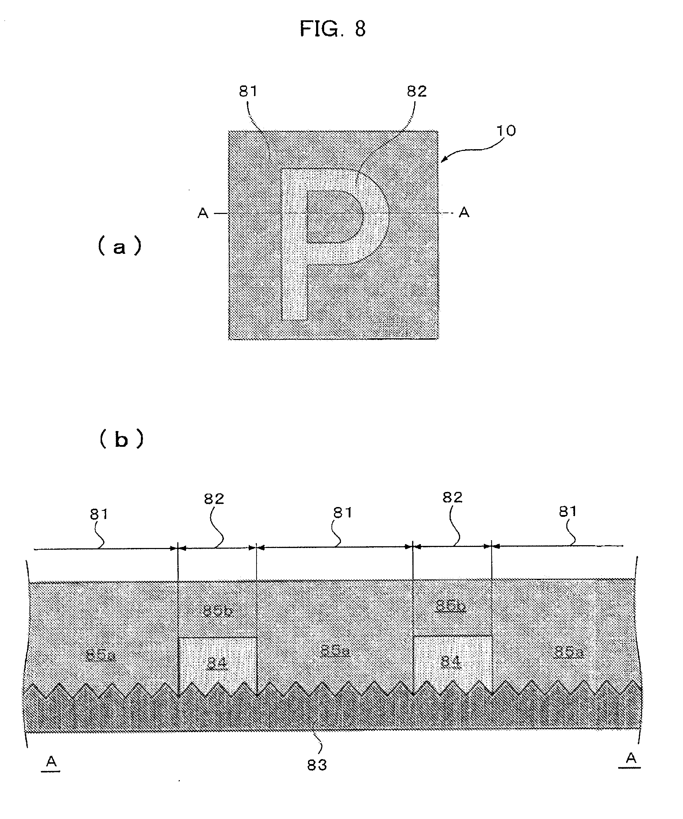

FIG. 8 shows a modification of the third embodiment.

FIG. 8(a) is a plan view and FIG. 8(b) is an enlarged view showing the A-A sectional view of FIG. 8(a). In the second embodiment, the first structural color regions 61 and the surface of the protective layer 64 in the second structural color region 62 are exposed to the air. In this modification, the surface of a triangular groove array structure 83 in first structural color regions 81 and the surface of a protective layer 84 in a second structural color region 82 are respectively covered with protective layers 85a and 85b and are not exposed to the air. In contrast to the configuration of FIG. 7, the letter "P" is covered with the protective layer having the refractive index N1. Thus the contrast of the observed letter "P" is inverted from that of the configuration of FIG. 7.

To be specific, on the surface of the triangular groove array structure 83, the first structural color regions 81 and the second structural color region 82 are formed. The first structural color regions 81 and the second structural color region 82 are formed as follows: in the second structural color region 82, the surface of the triangular groove array structure 83 is covered with the protective layer 84 having the refractive index N1. The surface of the protective layer 84 and the first structural color regions 81 disposed on both sides of the second structural color region 82 are respectively covered with the protective layers 85b and 85a having the refractive index N2 different from the refractive index N1, so that the surfaces of the first structural color regions 81 and the second structural color region 82 are flush with each other.

### (Fourth Embodiment)

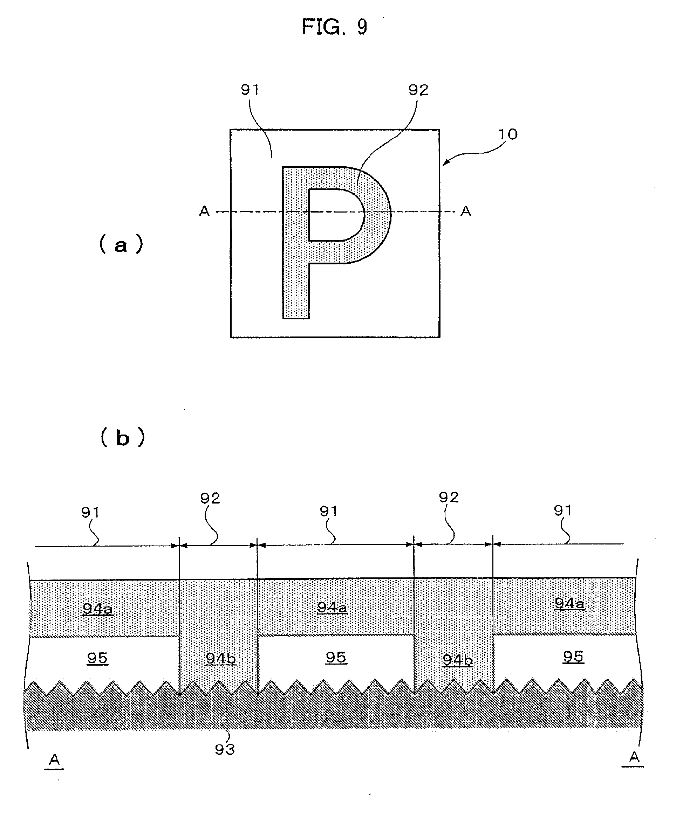

FIG. 9 shows a fourth embodiment of an exterior part according to the present invention.

FIG. 9(a) is a plan view and FIG. 9(b) is an enlarged view showing the A-A sectional view of FIG. 9(a). Illustrated is a structural color region 10 on the surface of the exterior part.

In the third embodiment, the overall surface of the groove array structure 73 is covered with the protective layer 74c and the protective layer 75b, whereas in the fourth embodiment, an air layer 95 containing the air is provided on a groove array structure 93.

In the fourth embodiment, the structural color region has the triangular groove array structure 93 with a constant structure period P.

On the surface of the triangular groove array structure 93, first structural color regions 91 and a second structural color region 92 are formed. The first structural color regions 91 and the second structural color region 92 are formed as follows: in the first structural color regions 91, the surface of the triangular groove array structure 93 is covered with the air layer 95 containing the air with a refractive index of 1. Further, the surface of the air layer 95 and the surface of the triangular groove array structure 93 in the second structural color region 92 between the first structural color regions 91 are respectively covered with protective layers 94a and 94b having a refractive index N that is different from the refractive index of 1, so that the surfaces of the first structural color regions 91 and the second structural color region 92 are flush with each other.

Wavelength diffraction characteristics are affected only by the refractive index of a part directly in contact with the triangular groove array structure 93. Variations in color development characteristics owing to the influence of the refractive indexes of 1 and N can bring a pattern and a character into relief with a contrast. The protective layer 94a having the refractive index N is provided in the first structural color regions 91 via the air layer 95 simply to protect the triangular groove array structure 93. In the present example, a part other than a letter "P" is covered with the air layer 75 having the refractive index of 1 and the letter "P" is covered with the protective layer 94b having the refractive index N.

The structural color regions are formed as follows:

First, on the triangular groove array structure 93 formed by the foregoing processing method, only the first structural color regions 91 are covered with a mask, and the second structural color region 92 is coated with a material that has the refractive index N and is suitable for the relief structure of the triangular groove array structure 93, so that the protective layer 94b is formed.

Next, the air layer 95 formed by removing the mask in the first structural color regions 91 and the surface of the protective layer 94b in the second structural color region 92 are coated with the protective layer having the refractive index N, so that the first structural color regions 91 and the second structural color region 92 are both covered with the protective layer while keeping the air layer 95 in the first structural color regions 91.

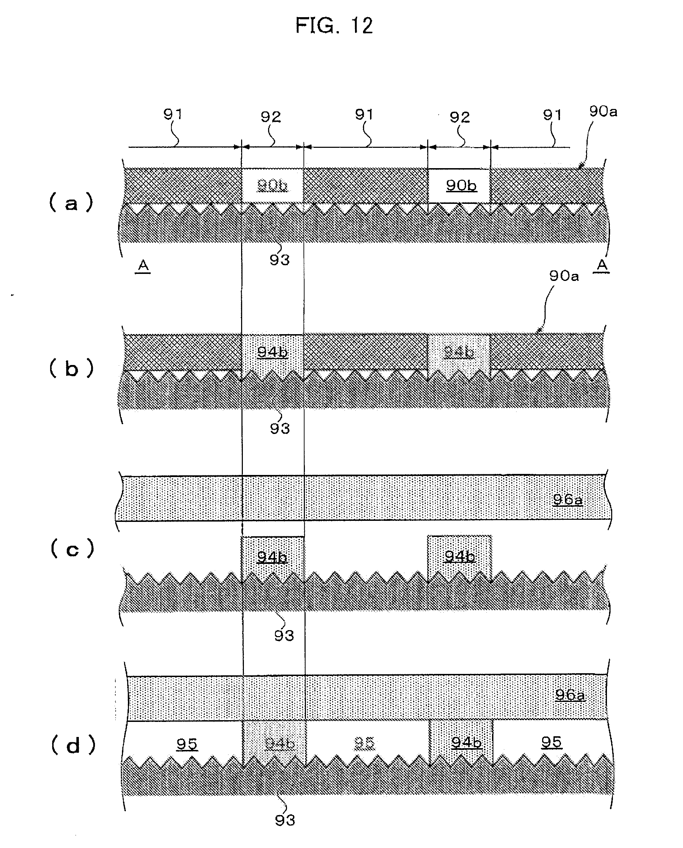

FIG. 12 shows another specific manufacturing method according to the fourth embodiment.

In FIG. 12(a), a mask 90a is formed on the triangular groove array structure 93.

In FIG. 12(b), a material having the refractive index N is applied on the mask 90a to form the protective layer 94b that comes into contact with the surface of the triangular groove array structure 93 from openings 90b of the mask 90a.

In FIGS. 12(c) and 12(d), after the mask 90a is removed, a sheet 96a is bonded over the adjacent protective layers 94. The sheet 96a has the same refractive index as the protective layer 94 and is about 0.1 mm to 0.5 mm (100 µm to 500 µm) in thickness. The first structural color regions 91 and the second structural color region 92 can be both covered with the protective layer thus while keeping the air layer 95 in the first structural color regions 91.

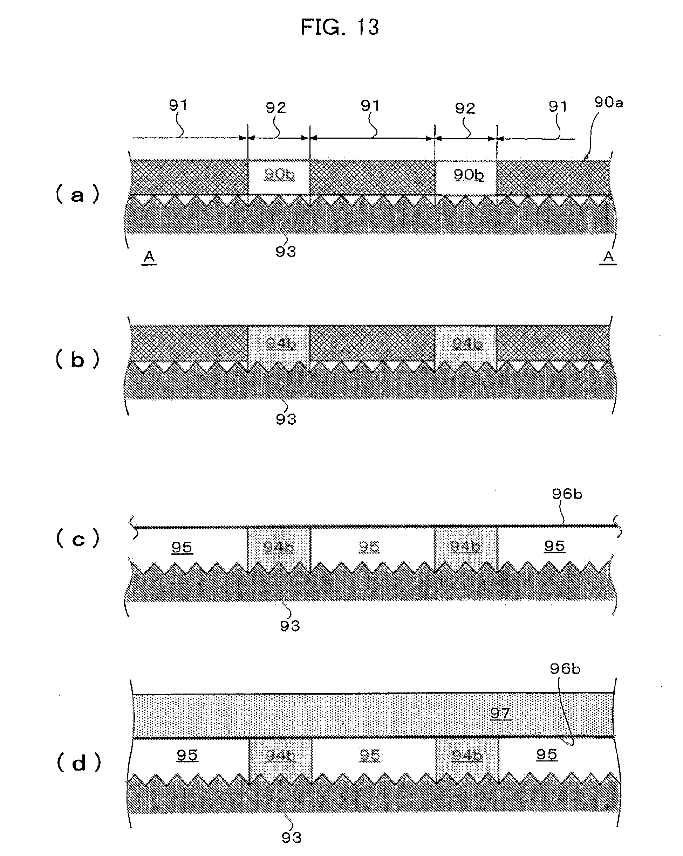

FIG. 13 shows still another specific manufacturing method according to the fourth embodiment.

In FIG. 13(a), the mask 90a is formed on the triangular groove array structure 93.

In FIG. 13(b), the material having the refractive index N is applied on the mask 90a to form the protective layer 94b that comes into contact with the surface of the triangular groove array structure 93 from the openings 90b of the mask 90a.

In FIG. 13(c), after the mask 90a is removed, a film 96b is bonded over the adjacent protective layers 94b to form the air layer 95 in the first structural color regions 91 between the adjacent protective layers 94b.
The film 96b is about 0.1 mm to 0.5 mm (100 µm to 500 µm) in thickness.

In FIG. 13(d), a material is applied over the first structural color regions 91 and the second structural color region 92 from above the film 96b, so that a flat protective layer 97 is formed. The protective layer 97 has the same refractive index as the protective layer 94b. The first structural color regions 91 and the second structural color region 92 can be both covered with the protective layer 97 thus while keeping the air layer 95 in the first structural color regions 91.

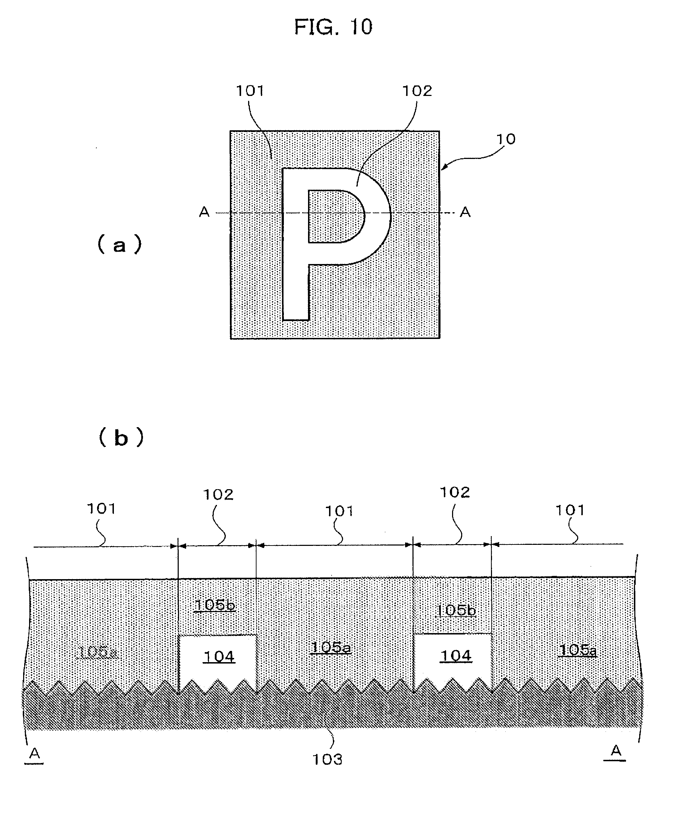

FIG. 10 shows a modification of the fourth embodiment.

FIG. 10(a) is a plan view and FIG. 10(b) is an enlarged view showing the A-A sectional view of FIG. 10(a). In contrast to the configuration of FIG. 9, the letter "P" has an air layer 104. Thus the contrast of the observed letter "P" is inverted from that of the configuration of FIG. 9.

To be specific, on the surface of a triangular groove array structure 103, first structural color regions 101 and a second structural color region 102 are formed. The first structural color regions 101 and the second structural color region 102 are formed as follows: in the second structural color region 102, the surface of the triangular groove array structure 103 is covered with the air layer 104 containing the air with a refractive index of 1. The surface of the air layer 104 and the surface of the triangular groove array structure 103 in the first structural color regions 10 on both sides of the second structural color region 102 are respectively covered with protective layers 105a and 105b having the refractive index N different from the refractive index of 1, so that the surfaces of the first structural color regions 101 and the second structural color region 102 are flush with each other.

In the embodiments configured thus, the structural color regions that develop colors with a relief structure are provided on the surface of the exterior part, wherein the protective layers (including the air layer) in contact with the uniform triangular groove shapes having a constant structure period are varied in refractive index. Thus in the case where the exterior part has uniform triangular groove shapes with a constant structure period, the color development characteristics can be changed. When a coating is applied to a molded article after processing on the die of the exterior part and the transfer to the molded article, it is not necessary to change the die according to the color development characteristics.

Further, a pattern and a character can be brought into relief with a contrast by using structural colors, improving the design of the exterior part. By applying the exterior parts of the first to fourth embodiments to at least a part of the surface of electronic equipment, the electronic equipment can be highly decorative equipment.

Such structural color development does not require various pigments, dyes, or organic solvents, thereby eliminating the need for aftertreatment such as waste liquid treatment. It is therefore possible to reduce a load in operations and environments. Moreover, the manufacturing cost of printing, pasting, and painting can be reduced and a large amount of carbon dioxide in a painting step can be also reduced.

The structural color development hardly varies with time by ultraviolet rays and advantageously provides high gloss. Thus the structural color development is useful as a painting method and a coloring device at least on a part of the surface of an exterior part such as an exterior panel and an automobile instrument panel on electronic equipment, electrical appliances, cellular phones, and so on.

Of the protective layers, the light-transmissive resin requiring a high refractive index is, e.g., thiourethane resin (a refractive index of about 1.7) used for spectacle lenses and the like. Further, the light-transmissive resin requiring a low refractive index is, e.g., amorphous fluorocarbon resin (a refractive index of more than 1.3) used for the core layers of optical fibers.

### Industrial Applicability

The present invention can improve the functions of the exterior parts of, e.g., electronic equipment, electrical appliances, cellular phones, and automobiles.

## Claims

1. An exterior part on which a structural color region developing a color with a relief structure is provided,
the structural color region comprising:
a groove array structure on which grooves are formed in parallel with a constant structure period; and
first and second regions having different refractive indexes on the groove array structure.

2. An exterior part on which a structural color region developing a color with a relief structure is provided,
the structural color region comprising:
a groove array structure on which grooves are formed in parallel with a constant structure period; and
first and second regions provided on the groove array structure,
the groove array structure being covered with a light-transmissive protective layer in the first region and in direct contact with air in the second region.

3. An exterior part on which a structural color region developing a color with a relief structure is provided,
the structural color region comprising:
a groove array structure on which grooves are formed in parallel with a constant structure period; and
an air layer and first and second regions that are provided on the groove array structure,
the air layer containing air,
the first region being covered with a first protective layer that is a light-transmissive layer covering a surface of the air layer and has a different refractive index from a refractive index of the air,
the second region being covered with a second protective layer that is a light-transmissive layer covering a surface of the groove array structure other than the air layer and has a same refractive index as the first protective layer.

4. An exterior part on which a structural color region developing a color with a relief structure is provided,
the structural color region comprising:
a groove array structure on which grooves are formed in parallel with a constant structure period; and
first and second regions provided on the groove array structure,
the first region being covered with a fourth protective layer that is a light-transmissive layer covering a surface of a third protective layer and has a different refractive index from a refractive index of the third protective layer,
the third protective layer being a light-transmissive layer partially covering a surface of the groove array structure,
the second region being covered with a fifth protective layer that is a light-transmissive layer covering the surface of the groove array structure other than the third protective layer and has a same refractive index as the fourth protective layer.

5. The exterior part according to any one of claims 1 to 4, wherein the grooves of the groove array structure are triangular in cross section in a depth direction.

6. A method of manufacturing an exterior part, in fabrication of the exterior part on which a structural color region developing a color with a relief structure is provided,
the method comprising:
forming, in the structural color region, a groove array structure on which grooves are formed in parallel with a constant structure period; and
forming first and second regions on the groove array structure,
the groove array structure being covered with a light-transmissive protective layer in the first region and in direct contact with air in the second region.

7. A method of manufacturing an exterior part, in fabrication of the exterior part on which a structural color region developing a color with a relief structure is provided,
the method comprising:
forming, in the structural color region, a groove array structure on which grooves are formed in parallel with a constant structure period; and
forming an air layer and first and second regions on the groove array structure,
the air layer containing air,
the first region being covered with a first protective layer that is a light-transmissive layer covering a surface of the air layer and has a different refractive index from a refractive index of the air,
the second region being covered with a second protective layer that is a light-transmissive layer covering a surface of the groove array structure other than the air layer and has a same refractive index as the first protective layer.

8. A method of manufacturing an exterior part, in fabrication of the exterior part on which a structural color region developing a color with a relief structure is provided,
the method comprising:
forming, in the structural color region, a groove array structure on which grooves are formed in parallel with a constant structure period;
forming second protective layers at certain intervals on the groove array structure, the second protective layers being light-transmissive layers covering a surface of the groove array structure; and
forming an air layer on the groove array structure by disposing a sheet having a same refractive index as the second protective layer on and across the adjacent second protective layers such that the air layer having a different refractive index from a refractive index of the second protective layer is formed between the second protective layers and between the groove array structure and the sheet.

9. A method of manufacturing an exterior part, in fabrication of the exterior part on which a structural color region developing a color with a relief structure is provided,
the method comprising:
forming, in the structural color region, a groove array structure on which grooves are formed in parallel with a constant structure period;
forming second protective layers at certain intervals on the groove array structure, the second protective layers being light-transmissive layers covering a surface of the groove array structure; and
forming an air layer on the groove array structure by disposing a film having a same refractive index as the second protective layer on and across the adjacent second protective layers such that the air layer having a different refractive index from a refractive index of the second protective layer is formed between the second protective layers and between the groove array structure and the film.

10. A method of manufacturing an exterior part, in fabrication of the exterior part on which a structural color region developing a color with a relief structure is provided,
the method comprising:
forming, in the structural color region, a groove array structure on which grooves are formed in parallel with a constant structure period; and
forming first and second regions on the groove array structure,
the first region being covered with a fourth protective layer that is a light-transmissive layer covering a surface of a third protective layer and has a different refractive index from a refractive index of the third protective layer,
the third protective layer being a light-transmissive layer partially covering a surface of the groove array structure,
the second region being covered with a fifth protective layer that is a light-transmissive layer covering the surface of the groove array structure other than the third protective layer and has a same refractive index as the third protective layer.

11. The method of manufacturing an exterior part according to claim 10, further comprising:
forming the third protective layer of the first region on the groove array structure; and
forming the fourth and fifth protective layers respectively on the third protective layer and in the second region on the groove array structure, the fourth and fifth protective layers having the refractive indexes different from the refractive index of the third protective layer.

12. The method of manufacturing an exterior part according to any one of claims 6 to 10, wherein the grooves of the groove array structure are uniformly linear in shape and are triangular in cross section in a depth direction.

13. Electronic equipment comprising the exterior part according to any one of claims 1 to 4, the exterior part being provided at least on a part of a surface of the electronic equipment.

14. Electronic equipment comprising a structural color region at least on a part of a surface of an exterior part of the electronic equipment, the structural color region being formed by the method of manufacturing the exterior part according to any one of claims 6 to 10.
